# EUROPEAN PATENT APPLICATION

(11) **EP 1 975 846 A2**
(43) Date of publication of application: **01.10.2008**
(21) Application number: 08251081.9
(22) Date of filing: 26.03.2008
(51) Int. Cl.: G06F 21/24

(54) **Systems and methods for enhancing security of files**

(30) Priority: 27.03.2007 US 691530
(71) Applicant: Verint Americas Inc., Melville NY 11747 (US)
(72) Inventor: Li, Qirong, Georgia 30005 (US); Brodhagen, Kenneth Richard, Georgia 30076 (US)
(74) Representative: Keston, Susan Elizabeth

(57) **Abstract**

Systems and methods for enhancing security of files are provided. A representative method includes: associating information with a file, the information identifying contents of the file; monitoring the information and the file contents; detecting a lack of correlation between the information and the file; and responsive to detecting the lack of correlation, storing information corresponding to a modification of the file separately from the file.

## Description

The present invention relates to a system and method for enhancing security of files.

There are many environments in which maintaining the integrity of computer files is paramount. Such an environment is a trading room in which decisions regarding stock trades, for example, are communicated from a client to a trader. Responsive to those communications, the trader executes trades by interfacing with a computer application executing on a workstation.

Recently, it has become commonplace to record both the aforementioned communications and information associated with the workstation so that the interaction between the trader and the client can be reviewed for quality assurance purposes, for example. Notably, if a client indicates that trading instructions were not properly followed, the computer files used to store the relevant information about that interaction can be accessed and reviewed.

Various respective aspects and features of the invention are defined in the appended claims. Combinations of features from the dependent claims may be combined with features of the independent claims as appropriate and not merely as explicitly set out in the claims.

In this regard, systems and methods for enhancing security of files are provided. An embodiment of such a method comprises: associating information with a file, the information identifying contents of the file; monitoring the information and the file contents; detecting a lack of correlation between the information and the file; and responsive to detecting the lack of correlation, storing information corresponding to a modification of the file separately from the file.

Another example embodiment of a method for enhancing security of files comprises: coding a file of a recording system with information corresponding to contents of the file; detecting a lack of correlation between the contents of the file and the information; and responsive to detecting the lack of correlation: storing information corresponding to the lack of correlation in a server located remote from a storage device used to store the file; and triggering an alarm.

An embodiment of an example system comprises: a recording system operative to record communications; a coding system operative to code a file, associated with the recording system, with information corresponding to contents of the file; and a monitoring system operative to monitor the information such that a lack of correlation between the contents and the information is detected.

Embodiments of the invention will now be described with reference to the accompanying drawings, throughout which like parts are referred to by like references, and in which:
FIG. 1 is a schematic diagram of an environment in which an embodiment of a system for enhancing security of files is implemented.
FIG. 2 is a flow chart depicting functionality of an embodiment of a system for enhancing security of files.
FIG. 3 is schematic diagram of another embodiment of a system for enhancing security of files.
FIG. 4 is a graph depicting TDM audio captured in a WAVE format.
FIG. 5 is a graph depicting another embodiment of a WAVE format for TDM capture.
FIG. 6 is a graph depicting IP data captured in a WAVE format.
FIG. 7 is a graph depicting another embodiment of a WAVE format for IP capture.

Systems and methods for enhancing security of files will now be described with respect to several example embodiments. The examples have been chosen for ease of description and are not intended to be limiting. By way of example, the embodiments should not be construed as being limited to a particular implementation, such as a trading room environment. To the contrary, various embodiments could be implemented in various types of customer centers. In this regard, a customer center may include, but is not limited to, outsourced contact centers, outsourced customer relationship management, customer relationship management, voice of the customer, customer interaction, contact center, multi-media contact center, remote office, distributed enterprise, work-at-home agents, remote agents, branch office, back office, performance optimization, workforce optimization, hosted contact centers, and speech analytics, for example.

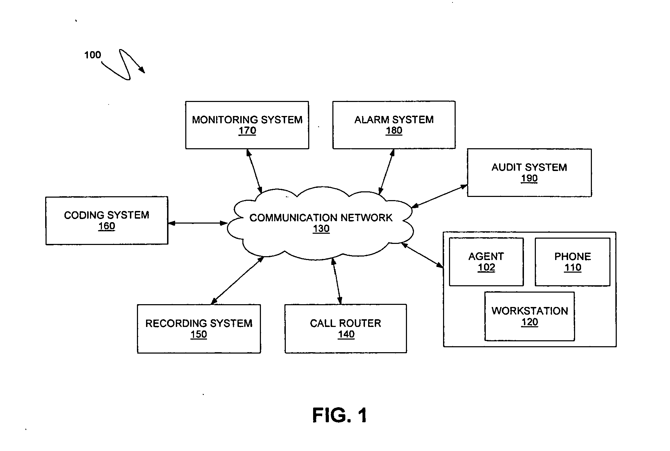

FIG. 1 is a schematic diagram of an environment in which an embodiment of a system for enhancing security of files is implemented. In particular, FIG. 1 depicts a customer center 100 that is staffed by agents, e.g., agent 102, who handle incoming and/or outgoing contacts. Although the traditional and most common form of contact is by phone, other types of contacts are becoming more common (e.g., text chat, web collaboration, email, and fax). Such an agent interacts with customers from a workspace (only one of which is depicted) that includes an agent phone 110 and a workstation computer 120. A network 130 connects one or more of the workstations 120.

A call router 140 distributes incoming contacts to available agents. When the contacts are made by traditional phone lines, the call router 140 operates by connecting outside trunk lines to agent trunk lines. In this environment, the call router 140 may be implemented by an automatic call distributor (ACD), which queues calls until a suitable agent is available. Other types of contacts, such as Voice over Internet Protocol (VoIP) calls and computer-based contacts (e.g., chat, email) are routed over one or more data networks. These contacts are distributed over network 130 to one of the agent workstations 120.

During interaction with a customer, the agent may use one or more applications running on the workstation 120. Example workstation applications give the agent access to customer records, product information, ordering status, and transaction history, for example. A recording system 150 is used to record information corresponding to the applications, e.g., screen shots from the workstation, and/or information corresponding to the communication with the customer, e.g., voice from a phone call. The recorded information can be stored for later use, such as for analysis and/or playback.

The embodiment of FIG. 1 also includes a coding system 160, a monitoring system 170, an alarm system 180 and an audit system 190. The coding system annotates one or more files associated with the recording system so that integrity of the files can be monitored. By way of example, the coding system can encode configuration files of the recording system with information that can be checked to determine whether the configuration files have been tampered with. Additionally or alternatively, files associated with the recordings themselves can be annotated such as audio files, screen files, audit logs, security certificates and security key files.

The monitoring system 170 monitors files in order to determine whether information associated with those files has been changed. By way of example, some embodiments can monitor checksums, which can be either added to the files by the coding system or stored separately such as in a database. If the monitoring system determines that the checksums do not correlate to the data contained in the files, the monitoring system can provide an indication that the files may have been tampered with to alarm system 180.

Responsive to receiving such an indication from the monitoring system, the alarm system can provide an alert to a user of the system. By way of example, an alarm system could provide an email notification to a user with appropriate access privileges, support sending SNMP trap messages and/or turning on a PC beeper. Additionally or alternatively, notification can be sent to the audit system 190, so that the event of a possible tampering of a file can be logged. In some embodiments, such a log can be maintained in a system that is remote from the files being monitored, thereby adding another layer of security. That is, if a file is tampered with, not only would the coding system need to be breached in order to update the coding to match the changes to the file, but the indication of a possible tampering would need to be removed from the audit log.

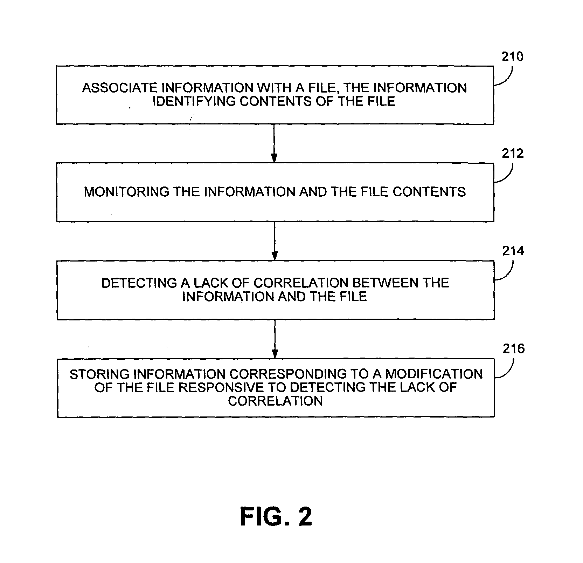

Functionality of an embodiment of a system for enhancing security of files is depicted in the flowchart of FIG. 2. As shown in FIG. 2, the functionality (or method) may be construed as beginning at block 210, in which a file is associated with information that identifies contents of the file. By way of example, the file can be coded with the information. In block 212, the information is monitored. In block 214, lack of correlation between the information and the file is detected, such as would occur if the file were modified. Then, in block 216, responsive to detecting the lack of correlation, information corresponding to the modification is stored separately from the file.

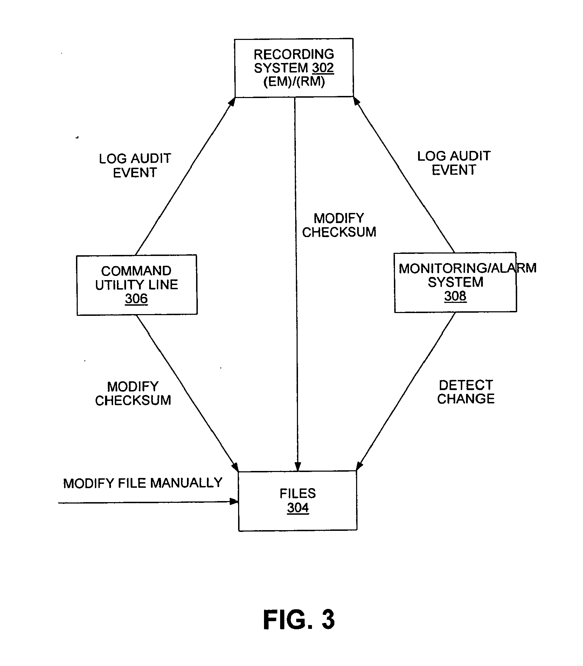

FIG. 3 schematically depicts another embodiment of a system for enhancing security of files. As shown in FIG. 3, system 300 includes a recording system 302, which incorporates an enterprise manager (EM) and/or a recorder manager (RM). Such managers provide user interfaces for recorders of the system. In this example, enhanced security is to be provided for configuration files 304 associated with such recorders (not shown). However, in other embodiments, enhanced security can be provided for various other types of files, such as audio files. It should also be noted that such files can be provided in various formats, such as XML.

A "COMMAND LINE UTILITY" 306 also is provided that enables a user to access files, such as configuration files 304. In this regard, the command line utility can be used when the files are installed at a location remote from customer support personnel and some form of maintenance is to be performed on the files. Thus, the command line utility allows remote access to the files. Notably, the UI of the recording system also can be used to access the files, such as for modifying a checksum associated with file 304.

The embodiment of FIG. 3 also includes a monitoring/alarm system 308 that is configured to detect tampering of the files 304 and provide an alarm indication corresponding to the detection of such tampering.

In this embodiment, enhanced security is generally performed in two steps. That is, when the configuration files are generated or modified, a checksum is generated and stored in the files. Then, the monitoring/alarm system monitors and validates the files, such as responsive to a change. If the validation fails, an audit event will be logged and an alarm will be raised.

In this embodiment, the checksum is an encrypted checksum. By way of example, such an encrypted checksum can be generated by first hashing the file using SHA256 and then encrypting the result using AES256. It should be noted that the SHA (Secure Hash Algorithm) family is a set of related cryptographic hash functions. The SHA algorithm is commonly used in large variety of security application and protocols. SHA is considered to be the successor to MD5, an earlier, widely-used hash function. The SHA algorithms were designed by the National Security Agency (NSA) and published as a US government standard. The SHA-256 algorithm can be performed on files, text strings as well as Hex strings. The SHA-256 produces an output of 256-bit hash value. The AES (Advanced Encryption Standard) is a symmetric key encryption technique. Clearly, various other techniques can be used for providing an encrypted checksum.

In the embodiment of FIG. 3, all the files that need to be provided with enhanced security are in the XML format. A checksum is calculated from the file content and stored at the end of the file as an XML comment. The reason the checksum is placed as an XML comment outside the root node is to avoid any content change resulting from processing the XML content using different DOM parsers. That is, the process of the serialization may remove spaces or comments that could be counted during the calculation the checksum.

In order to store the checksum in text format, each byte of the encrypted checksum can be converted into a hexadecimal value. For instance, upper case letters for "A" to "F" can be used. The following is an example:

| | | |
|---|---|---|
| Original: | 1111 | 0011 |
| | ← (most significant bit) | |
| Converted to: | F | 3 |

Therefore, the resulted checksum in the file will have a length of 64 bytes (32 byte of encrypted checksum x 2). The length of the comment can be fixed, e.g. 90 bytes (64 bytes of the checksum + 26 bytes of other characters). The file content used to calculate the checksum can start at the beginning of the file up to the character before the "<!-" tag. The content should be treated as a byte stream by the hash algorithm, so changing a comment or adding (or removing) a line carriage should result in the change of the checksum.

When such a checksum tag is read, the "version" attribute can be used to determine the version-dependent information, such as the length of the checksum and the algorithms used to generate the checksum. The following is a recommended sequence for retrieving a checksum: open a file and position the file pointer to the end of the file; rewind the file pointer until it reads ">"; rewind two more characters to skip "--". If the characters are not "--", trace an error and exit; rewind 9 more characters to retrieve the version number. If not "version=x", then trace an error and exit; based on the version number, rewind accordingly to retrieve the checksum.

In the embodiment of FIG. 3, the monitoring/alarm system 308 monitors the files for changes. If a checksum mismatch is detected, the monitoring/alarm system logs an audit event indicating the file has been tampered with and raises an alarm. If for some reason, the audit event is not logged, a warning message can be written to the Windows NT event log as well as the log file. The NT event log message could be: "Failed to log an audit event. [reason]". In this case, the "reason" could be "<file name> has been tampered with". The "file name" could be the full path of the file. If, however, a checksum mismatch is not detected, the monitoring/alarm system acknowledges the alarm.

With respect to auditing, the monitoring/alarm system can send an HTTP request to an RM servlet to log the file tampered event. The request could contain the following content in an XML format:

```
 <?xml version=" 1.0" encoding="UTF-8"?>
 <AuditTrailEntries>
           <AuditTrailEntry who="krush" when="2001-09-11T09:30:47Z"
                where="snakebite" actionld=" 101 ">
                <AuditTrailProperty name="FileName">
                      <Value>C:\Program                            Files\Witness
                      Systems\conf\cache\BusinessRules.xml</Value>
                </AuditTrailProperty>
           </AuditTrailEntry>
      </AuditTrailEntries>
```

In this embodiment, the XML is designed in such a way that it can be expanded in the future to log other types of events. Various types of information can be contained in the log, such as an action ID, the system login that last modified the file, the alarm trigger time, the recorder host name, and/or the name of the file that has been tampered with. With respect to notification of a potential tampering event, such notification can be provided in various manners. By way of example, an email can be sent with information such as described above as being entered into the audit log.

Modification of a configuration file typically can occur in one of two ways. The first is by using a user interface (UI) of an EM or RM, and the second is by manually modifying the file in a text editor, e.g. Notepad. A user may want to modify the file for various reasons, such as there is no UI available, the UI program has a problem, or in some situations manual modification is more efficient. If the UI is used, the checksum can be automatically updated by the coding system. If the file is manually modified, however, correction of the checksum can be accomplished by using a stand-alone tool, such as a command line utility.

Such a command line utility can perform one or more of various functions. For example, some embodiments can validate the checksums for all the XML files under a specified folder. Additionally or alternatively, a command line utility can generate the checksum of an input file and store the checksum in that file. In some of these embodiments, the utility can generate the checksum and also send an audit event indicating that the checksum was changed. If the utility fails to connect to the audit servlet, for example, or the response from the audit system indicates a failure of logging the audit event, the command line utility can update the checksum, log a warning message to the NT event log and the log file, and display a message to the user.

In some embodiments, in addition to or instead of coding files in the manners previously described, other techniques can be used. Such techniques include fingerprinting and/or watermarking of files. Fingerprinting refers storing of parameters of a file such that the stored parameters can be compared to the actual file content in order to determine whether or not the file content has been altered. In contrast, watermarking involves combining the file content with other information, which may be difficult to discern, such that alteration of the content can be identified by determining that the watermark information has been altered. In this regard, audio and screen files can be fingerprinted and/or watermarked.

With respect to fingerprinting, fingerprinting is performed by the recorder components that write audio or screen data into the file. The fingerprinting is performed in two steps: calculating the checksum of the recorded data using an algorithm, such as the SHA-256 algorithm; and encrypting the checksum, such as by using the AES-256 algorithm, and storing the checksum in the file.

The fingerprinting is initially performed at the TDM capture engine, the IP capture engine and the screen capture engine, as appropriate. If the recorded data is to be compressed, a compressor recalculates the checksum after compression. The call or screen data can be later validated against its fingerprint through a standalone utility.

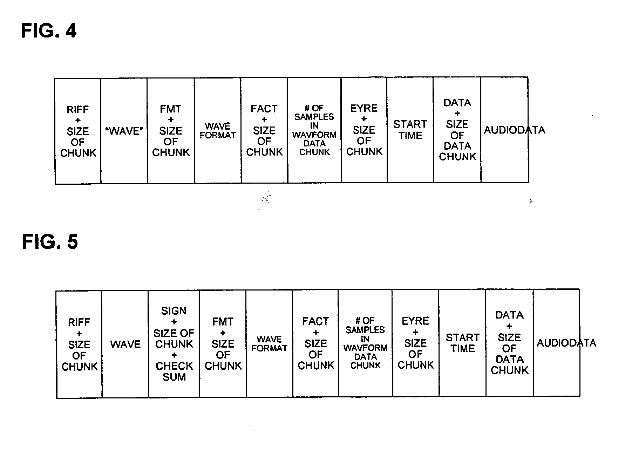

In this regard, TDM audio data can be captured in a WAVE format as depicted in FIG. 4. FIG. 4 shows the following chunks of information: "RIFF", which denotes Resource Interchange File Format (chunk name); "WAVE", which denotes Waveform audio format; "FMT", which denotes the subchunk name; "WAVE Format", which contains wave format information; "FACT", which denotes the subchunk name; "# of Samples", which contains the size (in sample points) of the waveform; "EYRE", which denotes the subchunk name; "START TIME", which denotes the start time of the recorded WAV file; "DATA", which denotes the subchunk name; and "AUDIO DATA", which contains the audio content.

The encrypted checksum can be added, as a separate chunk, between "RIFF" chunk and the "FMT" chunk as shown in FIG. 5. If the fingerprinting is enabled, the TDM capture engine runs an appropriate algorithm, such as the SHA-256 algorithm, on the INUM value (a unique number used to identify a recording), the "FMT", "FACT", "EYRE" and "DATA" chunks of the WAV file. The encrypted checksum is inserted into the "SIGN" chunk. If the fingerprinting is disabled, the "SIGN" chunk contains the encrypted hash value of the INUM. Thus, if a user removes the data in the "SIGN" chunk, there is an indication that the file has been tampered with. The encrypted checksum will be 32 bytes using the AES-256 algorithm.

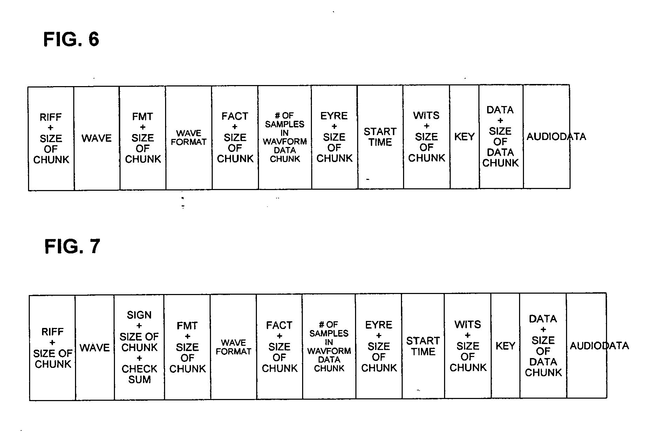

FIG. 6 depicts an existing wave format for IP capture. FIG. 6 shows the following chunks of information: "RIFF", "WAVE", "FMT", "WAVE Format", "FACT", "# of Samples", "EYRE", "START TIME", "WITS" (which denotes the subchunk name), "KEY" (e.g. a Cisco CallManager Encryption Key); "DATA", and "AUDIO DATA". As shown with reference to FIG. 7, the encrypted checksum is added between the "RIFF" chunk and the "FMT" chunk. In case of encrypted audio calls or fingerprinting is disabled, the "SIGN" chunk will have the encrypted value of the hashed INUM. For calls without encryption and fingerprinting enabled, the IP capture calculates the SHA-256 hash value on the INUM, the "FMT", "FACT", "EYRE", "WITS", "KEY" and "DATA" chunks of the WAV file. Then the encrypted checksum is stored into "SIGN" chunk when the fingerprinting flag is enabled.

When an IP call reaches the compressor, if the fingerprinting is disabled, the compressor doesn't need to perform any operation as the file header is already initialized with the encrypted hash value of the INUM. If the fingerprinting is enabled, for the encrypted calls, the compressor will decrypt the call, perform the SHA-256 hash value on the INUM value, the "FMT", "FACT", "EYRE" and "DATA" chunk, encrypt the hash value and store the result in the "SIGN" chunk. For the recorded calls that do not require audio encryption, the compressor performs the above operation without any decryption first. When the recorded data is processed by the compressor, the "WITS" chunk should be removed.

If call mixing is enabled for the compressor, the compressor will delete the WAV file for the higher INUM and perform the above operation on the WAV file belonging to the lower INUM. If call mixing is disabled, the compressor will perform the above operation on each WAV file.

With respect to screen capture, a screen capture engine can store screen data. By way of example, a screen data format may include a file header that contains the version number and is followed by data chunks, which contain payload length, command and graphical co-ordinates, for example. To support fingerprinting, the start time of the recording can be added to the file header and a fixed length data chunk can be added to the end of the file to contain the encrypted checksum. The checksum can be calculated on INUM and the data starting from the beginning of the screen file to the last data chunk that contains the video data.

As mentioned previously, watermarking can be used to enhance security of files. In this regard, a digital signature can be embedded into a recording (audio or screen capture). By storing information corresponding to the embedded watermark, integrity of a file can be monitored by comparing the information corresponding to the watermark that is contained in the file to the stored watermark. Thus, if it is determined that a direct correlation does not exist, the file may have been tampered with.

This description has been presented for purposes of illustration and description. It is not intended to be exhaustive or to limit the disclosure to the precise forms disclosed. Obvious modifications or variations are possible in light of the above teachings. The embodiments discussed, however, were chosen to illustrate the principles of the disclosure, and its practical application. The disclosure is thus intended to enable one of ordinary skill in the art to use the disclosure, in various embodiments and with various modifications, as are suited to the particular use contemplated. All such modifications and variation are within the scope of this disclosure, as determined by the appended claims when interpreted in accordance with the breadth to which they are fairly and legally entitled.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method for enhancing security of files comprising:
associating information with a file, the information identifying contents of the file;
monitoring the information and the file contents;
detecting a lack of correlation between the information and the file; and
responsive to detecting the lack of correlation, storing information corresponding to a modification of the file separately from the file.

2. The method of claim 1, wherein associating information with the file comprises coding the file with the information.

3. The method of claim 1, wherein, in storing information corresponding to the modification, the information is stored in a server located remote from the storage device used to store the file.

4. The method of claim 1, further comprising triggering an alarm responsive to detecting the lack of correlation.

5. The method of claim 4, wherein triggering the alarm comprises sending an email notification of the lack of correlation.

6. The method of claim 1, wherein coding comprises coding the file with a checksum.

7. The method of claim 6, further comprising updating the checksum responsive to an authorized modification of the file.

8. The method of claim 1, wherein the file is a configuration file.

9. The method of claim 8, wherein the configuration file is associated with a recording system for recording communications.

10. A method for enhancing security of files comprising:
coding a file of a recording system with information corresponding to contents of the file;
detecting a lack of correlation between the contents of the file and the information; and
responsive to detecting the lack of correlation:
storing information corresponding to the lack of correlation in a second storage device separate from a first storage device used to store the file; and
triggering an alarm.

11. The method of claim 10, wherein the file is a configuration file.

12. The method of claim 10, further comprising enabling a user to modify the information via a command line utility.

13. The method of claim 12, wherein further comprising enabling a user to modify the information via a user interface of the recording system.

14. A system for enhancing security of files comprising:
a recording system operative to record communications;
a coding system operative to code a file, associated with the recording system, with information corresponding to contents of the file; and
a monitoring system operative to monitor the information such that a lack of correlation between the contents and the information is detected.

15. The system of claim 14 wherein:
the file is a recording of a communication; and
the information is a checksum.

16. The system of claim 14, wherein:
the file is a recording of a communication; and
the information is a watermark, embedded in the file, comprising a digital signature unique to the file.

17. The system of claim 14, wherein the file is a configuration file of the recording system.

18. The system of claim 14, further comprising an audit system operative to record events associated with the recording system; and
wherein responsive to the monitoring system detecting the lack of correlation, the audit system stores information corresponding to the lack of correlation being detected.

19. The system of claim 14, further comprising an alarm system, wherein responsive to the monitoring system detecting the lack of correlation, the alarm system provides a notification corresponding to the lack of correlation.

20. The system of claim 19, wherein the alarm system sends the notification as an email.
